# EUROPEAN PATENT APPLICATION

(11) **EP 4 761 041 A1**
(43) Date of publication of application: **17.06.2026**
(21) Application number: 24913793.6
(22) Date of filing: 11.12.2024
(51) Int. Cl.: H02J 7/00, G01R 31/382, G01R 31/387, H01M 10/44

(54) **APPARATUS AND METHOD FOR SETTING CHARGING PROTOCOL**

(30) Priority: 27.12.2023 KR 20230193652
(71) Applicant: LG Energy Solution, Ltd., Seoul 07335 (KR)
(72) Inventor: WHANG, Tae-Kyung, Daejeon 34122 (KR); CHO, Il-Young, Daejeon 34122 (KR); LEE, Ji-Eun, Daejeon 34122 (KR)
(74) Representative: Goddar, Heinz J.
(86) International application number: PCT/KR2024/096732
(87) International publication number: WO 2025/143989

(57) **Abstract**

An apparatus for setting a charging protocol according to an embodiment of the present disclosure includes a profile acquisition unit configured to acquire a resistance profile indicating a corresponding relationship between a state of charge (SOC) and resistance for a battery charged at a predetermined C-rate; and a control unit configured to determine a target SOC satisfying a predetermined condition in the resistance profile, and set a charging protocol including a corresponding relationship between the predetermined C-rate and the target SOC.

## Description

### TECHNICAL FIELD

This application is based on and claims priority from Korean Patent Application No. 10-2023-0193652 filed on December 27, 2023, with the Korean Intellectual Property Office, the disclosure of which is incorporated herein in its entirety by reference.

The present disclosure relates to an apparatus and a method for setting a charging protocol, and more particularly, to an apparatus and a method for setting a charging protocol of a battery.

### BACKGROUND ART

As the demand for portable electronic devices such as notebook computers, video cameras and portable telephones has increased sharply, and electric vehicles, energy storage batteries, robots, satellites and the like have been developed in earnest in recent years, studies for high-performance batteries allowing repeated charging and discharging are being conducted actively.

Currently commercialized batteries include nickel cadmium batteries, nickel hydrogen batteries, nickel zinc batteries, and lithium batteries. Among the batteries, lithium batteries are attracting more attention than others due to their advantages over other batteries, including a substantially low memory effect to allow a high degree of freedom in charging and discharging, a low self-discharge rate, and high energy density, compared to nickel-based batteries.

Meanwhile, as the power-driven devices such as electric vehicles, electric motorcycles, and electric bicycles are commercialized, the demand for high-capacity and high-performance batteries is increasing. However, as the capacity of batteries increases, the time required to charge the batteries also increases, which emerges as a problem in using high-capacity batteries. In order to solve this problem, technologies for rapidly charging the batteries are being developed, but there is a concern that rapid charging may accelerate deterioration of the batteries. Therefore, in order to prevent deterioration of the batteries due to rapid charging, a rapid charging protocol capable of efficiently charging batteries is required.

### DISCLOSURE

### Technical Problem

The present disclosure is designed to solve the problems of the related art, and the present disclosure provides an apparatus and a method for setting a charging protocol.

Other objects and advantages of the present disclosure may be understood from the following description and will become more fully apparent from embodiments of the present disclosure. Also, it will be easily understood that the objects and advantages of the present disclosure may be implemented by the means indicated in the appended claims and combinations thereof.

### Technical Solution

An apparatus for setting a charging protocol according to one aspect of the present disclosure includes: a profile acquisition unit configured to acquire a resistance profile indicating a corresponding relationship between a state of charge (SOC) and resistance for a battery charged at a predetermined C-rate; and a control unit configured to determine a target SOC satisfying a predetermined condition in the resistance profile, and set a charging protocol including a corresponding relationship between the predetermined C-rate and the target SOC.

The control unit may be configured to determine a target section in the resistance profile, and determine the target SOC among SOCs within the target section.

The control unit may be configured to determine a first reference SOC and a second reference SOC satisfying the predetermined condition in the resistance profile, and determine an SOC section including the first reference SOC and the second reference SOC as the target section.

The control unit may be configured to determine the second reference SOC in the SOC section exceeding the first reference SOC.

The control unit may be configured to determine a minimum point with a corresponding maximum SOC in the resistance profile, and determine the SOC corresponding to the determined minimum point as the first reference SOC.

The control unit may be configured to determine a target point with a corresponding maximum change rate in the resistance profile, and determine the SOC corresponding to the determined target point as the second reference SOC.

The control unit may be configured to set the target SOC to a charge upper limit SOC corresponding to the predetermined C-rate.

The profile acquisition unit may be configured to acquire a plurality of resistance profiles with different corresponding C-rates.

The control unit may be configured to determine the target SOC in each of the plurality of resistance profiles, and set the charging protocol to include a corresponding relationship between the C-rate and the target SOC for the plurality of resistance profiles.

The resistance profile may be set to indicate a corresponding relationship between an SOC in a resting state and resistance according to a voltage drop in the resting state during charging of the battery at the predetermined C-rate while repeating a charging state and the resting state of the battery.

A charging control device according to another aspect of the present disclosure may be configured to control charging of a charging target battery, based on the charging protocol set by the apparatus for setting a charging protocol according to one aspect of the present disclosure.

A battery pack according to still another aspect of the present disclosure may include the charging control device according to another aspect of the present disclosure.

A vehicle according to still another aspect of the present disclosure may include the charging control device according to another aspect of the present disclosure.

A method for setting a charging protocol according to still another aspect of the present disclosure may include acquiring a resistance profile indicating a corresponding relationship between a state of charge (SOC) and resistance for a battery charged at a predetermined C-rate; determining a target SOC satisfying a predetermined condition in the resistance profile; and setting a charging protocol including a corresponding relationship between the predetermined C-rate and the target SOC.

### Advantageous Effects

According to an aspect of the present disclosure, deterioration of a battery due to charging is prevented, so that the battery may be safely charged, and life expectancy of the battery may be increased.

For example, the apparatus for setting a charging protocol has an advantage of setting a charging protocol capable of increasing life expectancy of the battery by preventing unnecessary deterioration of the battery.

The effects of the present disclosure are not limited to the effects mentioned above, and other effects not mentioned will be clearly understood by those skilled in the art from the description of the claims.

### DESCRIPTION OF DRAWINGS

The following drawings attached to this specification serve to further understand the technical idea of the present disclosure together with the detailed description of the present disclosure described below, so the present disclosure should not be interpreted as being limited to matters described in such drawings.
FIG. 1 is a diagram schematically illustrating an apparatus for setting a charging protocol, according to an embodiment of the present disclosure.
FIG. 2 is a diagram schematically illustrating a charging process, according to an embodiment of the present disclosure.
FIG. 3 is a diagram schematically illustrating a resistance profile, according to an embodiment of the present disclosure.
FIG. 4 is a diagram schematically illustrating a differential profile, according to an embodiment of the present disclosure.
FIG. 5 is a diagram schematically illustrating negative electrode profiles of a reference battery and first to third batteries.
FIG. 6 is a diagram schematically illustrating capacity profiles of the reference battery and the first to third batteries.
FIG. 7 is a diagram schematically illustrating resistance profiles of a battery, a positive electrode, and a negative electrode, according to an embodiment of the present disclosure.
FIG. 8 is a diagram schematically illustrating a plurality of resistance profiles, according to an embodiment of the present disclosure.
FIG. 9 is a diagram schematically illustrating a charging control device, according to another embodiment of the present disclosure.
FIG. 10 is a diagram schematically illustrating a battery pack, according to still another embodiment of the present disclosure.
FIG. 11 is a diagram schematically illustrating a charging device, according to still another embodiment of the present disclosure.
FIG. 12 is a diagram schematically illustrating a vehicle, according to still another embodiment of the present disclosure.
FIG. 13 is a diagram schematically illustrating a method for setting a charging protocol, according to still another embodiment of the present disclosure.

### BEST MODE

The terms and words used in the specification and claims should not be construed as being limited to their ordinary or dictionary meanings, but should be construed as meanings and concepts consistent with the technical idea of the present disclosure based on a principle that an inventor may appropriately define the concepts of terms in order to explain his or her invention in the best possible manner.

Therefore, embodiments in the specification and configurations illustrated in the drawings are merely provided as examples and do not represent all of the technical ideas of the present disclosure, so it should be understood that there may be various equivalents and modifications that could replace the technical ideas at the time of filing this application.

Also, in the description of the present disclosure, when it is deemed that explanation of related well-known constructions or functions may obscure the essence of the present disclosure, their detailed description thereof is omitted.

The terms including the ordinal number such as "first", "second", and the like, may be used to distinguish one element from another element among various elements, but these terms are not intended to limit the elements by the terms.

Throughout the specification, when a portion is referred to as "comprising" or "including" any element, it means that the portion may include other elements further, without excluding other elements, unless specifically stated otherwise.

In addition, throughout the specification, when a portion is referred to as being "connected" to another portion, it is not limited to the case that they are "directly connected", but it also includes the case where they are "indirectly connected" with another element interposed therebetween.

Hereinafter, embodiments of the present disclosure will be described in detail with reference to the attached drawings.

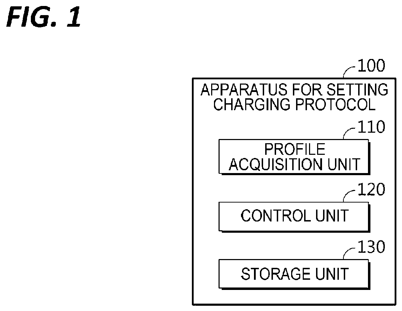

FIG. 1 is a diagram schematically illustrating an apparatus 100 for setting a charging protocol, according to an embodiment of the present disclosure.

Referring to FIG. 1, the apparatus 100 for setting a charging protocol may include a profile acquisition unit 110 and a control unit 120.

The profile acquisition unit 110 may be configured to acquire a resistance profile indicating a corresponding relationship between a state of charge (SOC) and resistance for a battery, which is charged at a predetermined C-rate.

Here, the battery means a single, physically separable independent cell including a negative terminal and a positive terminal. For example, the battery may be a lithium-ion battery or a lithium polymer battery. The type of the battery may be a cylindrical type, a prismatic type, or a pouch type. The battery may refer to a battery bank, a battery module, or a battery pack in which a plurality of cells are connected in series and/or in parallel. Hereinafter, for convenience of explanation, the battery is described as meaning a single independent cell.

The resistance profile may be set to indicate a corresponding relationship between the SOC in a resting state and the resistance according to a voltage drop in the resting state, during charging of the battery at the predetermined C-rate while repeating a charging state and the resting state of the battery.

Specifically, charging of the battery may start from a charging start SOC with a preset SOC or 0% of SOC, and continue until the battery reaches a preset charging termination SOC or 100% of SOC. In addition, during a charging process, the battery may enter the resting state each time the SOC of the battery increases by a preset unit of SOC. Here, the time of the resting state may be a preset unit time.

For example, a charging device may charge the battery in the charging state. The charging device may maintain the resting state for 1 second each time the SOC of the battery increases by 1%. Thereafter, the state of the charging device may be switched to the charging state where the battery is charged until the SOC of the battery increases by 1%.

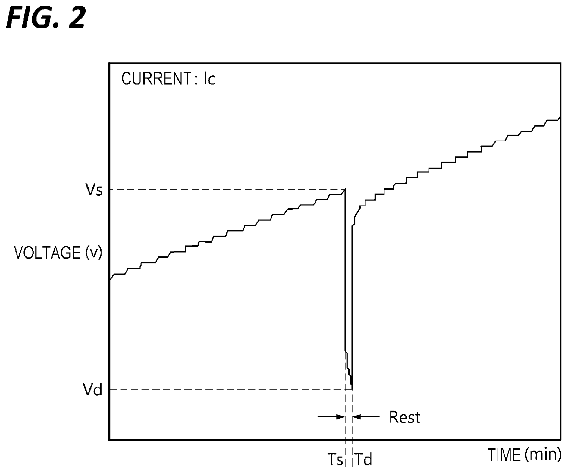

FIG. 2 is a diagram schematically illustrating a charging process according to an embodiment of the present disclosure.

In the embodiment of FIG. 2, the charging device may charge the battery, and a charging current is Ic. The battery is in the charging state before Ts and after Td, and is in the resting state during a period from Ts to Td. For example, a period before Ts and a period after Td are a charging period, and the period from Ts to Td is a resting period. During the resting period, a voltage of the battery may decrease from Vs to Vd.

The resistance of the battery may be calculated based on the charging current and a voltage drop during the resting period. For example, when assuming that the state of the battery is switched to the resting state each time the SOC of the battery increases by 1%, the resistance corresponding to the SOC may be calculated each time the SOC of the battery increases by 1%. In the embodiment of FIG. 2, since the voltage drop is Vs-Vd and the charging current is Ic, the resistance corresponding to the SOC may be calculated according to Equation "R = (Vs - Vd) ÷ Ic".

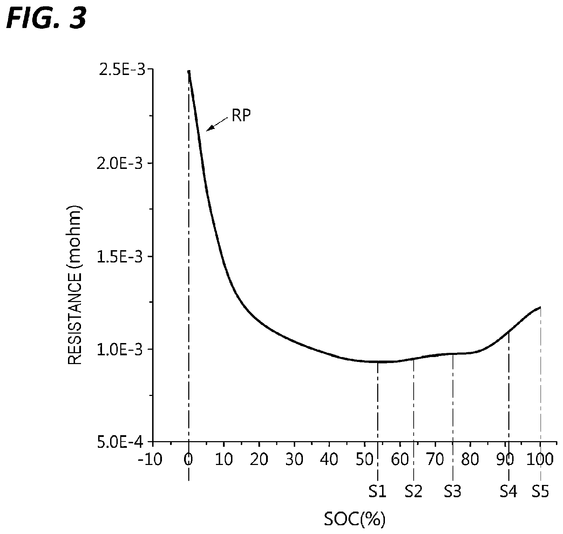

FIG. 3 is a diagram schematically illustrating a resistance profile RP according to an embodiment of the present disclosure. Specifically, in the embodiment of FIG. 3, the resistance profile RP may be represented by an X-Y graph with an X-axis set to SOC and a Y-axis set to resistance. In the embodiment of FIG. 3, the charging of the battery starts at 0% of SOC and terminates at 100% of SOC.

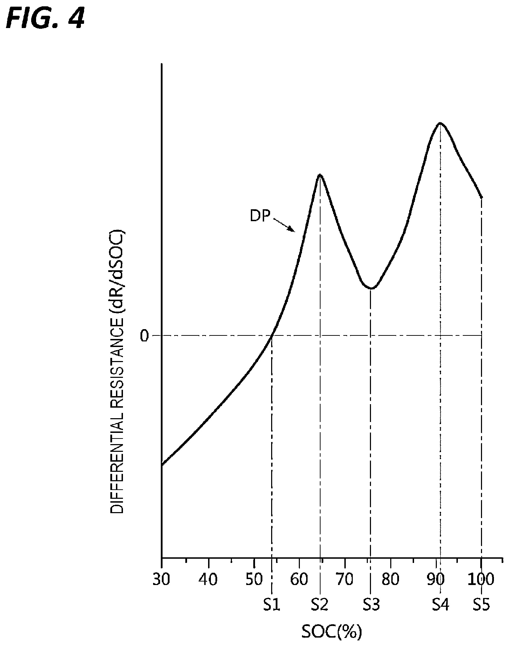

FIG. 4 is a diagram schematically illustrating a differential profile DP, according to an embodiment of the present disclosure. Here, the differential profile DP is a profile obtained by differentiating the resistance profile RP of FIG. 3 with respect to the SOC. That is, the differential profile DP may indicate a corresponding relationship between the SOC and differential resistance (dR/dSOC). Here, the differential resistance (dR/dSOC) is a resistance change rate for SOC. Specifically, in the embodiment of FIG. 4, the differential profile DP may be represented by an X-Y graph with an X-axis set to SOC and a Y-axis set to the differential resistance (dR/dSOC). The embodiment of FIG. 4 is a diagram illustrating only a portion of sections, ranging from 30% of SOC to 100% of SOC.

For example, the profile acquisition unit 110 may receive the resistance profile of the battery from the outside. That is, the profile acquisition unit 110 may receive and acquire the resistance profile of the battery from the outside.

As another example, the profile acquisition unit 110 may receive information regarding the SOC and resistance of the battery from the outside. The profile acquisition unit 110 may generate and acquire the resistance profile by mapping the SOC and the resistance corresponding to each other.

As still another example, the profile acquisition unit 110 may directly measure a current and a voltage of the battery. The profile acquisition unit 110 may calculate the SOCs and resistance for each SOC based on the measured current and voltage. The profile acquisition unit 110 may generate the resistance profile based on the calculated SOC and the resistance for each SOC. For example, the profile acquisition unit 110 may directly generate and acquire the resistance profile.

The profile acquisition unit 110 may be communicatively connected to the control unit 120. For example, the profile acquisition unit 110 may be connected to the control unit 120 in a wired and/or wireless manner. The profile acquisition unit may transmit the acquired differential profile to the control unit 120.

The control unit 120 may be configured to determine a target SOC satisfying a predetermined condition in the resistance profile.

Specifically, the control unit 120 may be configured to determine a target section in the resistance profile. Here, the target section may be an SOC section within the entire SOC section of the battery.

More specifically, the control unit 120 may be configured to determine a first reference SOC and a second reference SOC that satisfy a predetermined condition in the resistance profile, and determine an SOC section including the first reference SOC and the second reference SOC, as the target section.

Here, the first reference SOC may be equal to or greater than 0%, and may be equal to or less than the second reference SOC. The second reference SOC may be equal to or greater than the first reference SOC, and may be equal to less than 100%. When the first reference SOC and the second reference SOC are the same, the target section (the section from the first reference SOC to the second reference SOC) may include only the first reference SOC (or the second reference SOC), but for the convenience of explanation, is described as a target section. However, preferably, the control unit 120 may be configured to determine the second reference SOC in the SOC section exceeding the first reference SOC.

In addition, the control unit 120 may be configured to determine the target SOC among the SOCs within the target section.

For example, in the embodiment of FIG. 3, it is assumed that the target section is set to a first SOC S1 to a fourth SOC S4. The control unit 120 may determine any one SOC within an SOC section ranging from the first SOC S1 to the fourth SOC S4, as the target SOC.

The control unit 120 may be configured to set a charging protocol including a corresponding relationship between the predetermined C-rate and the target SOC.

The control unit 120 may be configured to set the target SOC to a charge upper limit SOC corresponding to the predetermined C-rate.

Here, the charge upper limit SOC is an SOC value set to terminate charging of the battery corresponding to the predetermined C-rate, and may also be referred to as a charge termination SOC.

In general, during a rapid charging process, a lithium plating phenomenon in which lithium metal is precipitated may occur due to an uneven reaction within the battery. In particular, a decrease in the resistance of the battery that appears in the vicinity of 100% of SOC in the resistance profile is caused by the precipitation of lithium metal. That is, a point at which the decrease in the resistance of the battery appears may be regarded as a point at which lithium plating starts. Therefore, in order to terminate the charging of the battery before the lithium plating starts, the control unit 120 may set the target SOC to the charge upper limit SOC corresponding to charging at the corresponding C-rate.

Specifically, the control unit 120 may be configured to set a charging protocol including a corresponding relationship between the C-rate and the charge upper limit SOC.

For example, the control unit 120 may set a charging protocol by mapping the C-rate and the charge upper limit SOC. That is, the charging protocol may include mapping information of the C-rate and the charge upper limit SOC. When the battery is charged at a first C-rate according to the charging protocol, the charging of the battery may be terminated when the SOC of the battery reaches the charge upper limit SOC corresponding to the first C-rate.

The apparatus 100 for setting a charging protocol, according to an embodiment of the present disclosure, may effectively prevent the occurrence of a lithium plating phenomenon during a charging process by determining the charge upper limit SOC for each C-rate. Accordingly, since battery deterioration due to charging is prevented, the battery may be safely charged, and life expectancy of the battery may be increased.

Hereinafter, embodiments of a reference battery and first to third batteries to which different charging protocols are applied will be described.

Here, the reference battery is a battery, which is charged according to a conventional charging protocol without applying the charging protocol of the present disclosure.

The first battery is a battery, which is charged according to a first charging protocol including the charge upper limit SOC for each C-rate corresponding to the first SOC S1 of FIG. 3.

The second battery is a battery, which is charged according to a second charging protocol including the charge upper limit SOC for each C-rate corresponding to a third SOC S3 of FIG. 3.

The third battery is a battery, which is charged according to a third charging protocol including the charge upper limit SOC for each C-rate corresponding to the fourth SOC S4 of FIG. 3.

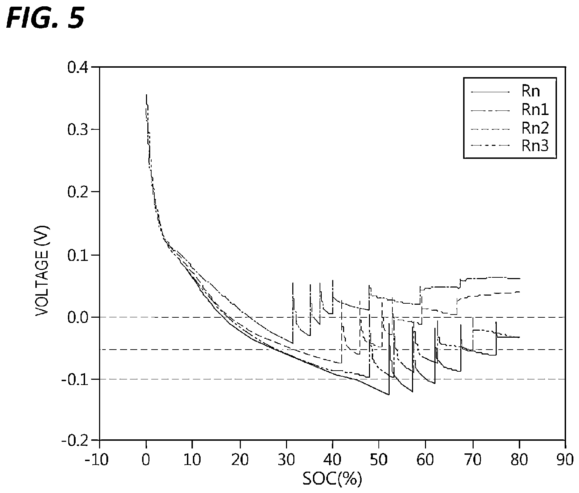

FIG. 5 is a diagram schematically illustrating negative electrode profiles Rn, Rn1, Rn2, and Rn3 of the reference battery, and the first to third batteries. Specifically, the negative electrode profile of FIG. 5 is a profile illustrating a corresponding relationship between the SOC and a negative electrode voltage. That is, FIG. 5 includes a reference negative electrode profile Rn corresponding to the reference battery, a first negative electrode profile Rn1 corresponding to the first battery, a second negative electrode profile Rn2 corresponding to the second battery, and a third negative electrode profile Rn3 corresponding to the third battery.

It is generally known that when the negative electrode voltage is equal to or lower than a predetermined voltage, a lithium electrodeposition reaction occurs. For example, when the negative electrode voltage decreases to a predetermined voltage or less, a lithium plating phenomenon may occur. Hereinafter, descriptions are made that the predetermined voltage is -0.1 [V].

Referring to the reference negative electrode profile, it may be confirmed that the negative electrode voltage of the reference battery is lower than -0.1 [V]. For example, when the charge upper limit SOC for each C-rate is not set, the negative electrode voltage may be lower than -0.1 [V], so that lithium metal may be precipitated on the surface of the negative electrode.

In the meantime, referring to the first negative electrode profile Rn1, the second negative electrode profile Rn2, and the third negative electrode profile Rn3, the negative electrode voltages of the first battery, the second battery, and the third battery may be maintained at a voltage greater than -0.1 [V]. For example, a lithium plating phenomenon due to charging may not occur in the first battery, the second battery, and the third battery.

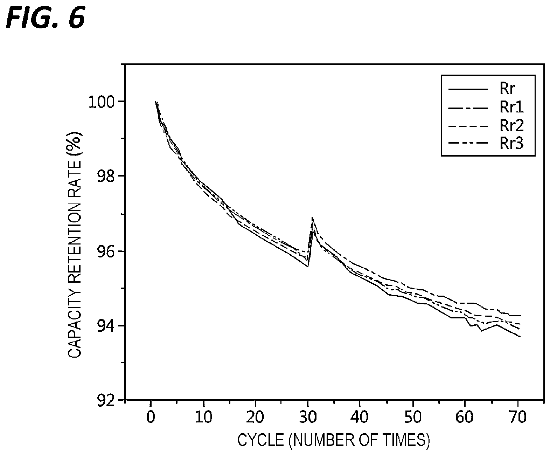

FIG. 6 is a diagram schematically showing the reference battery and the capacity profiles Rr, Rr1, Rr2, Rr3 of the first to third batteries. Specifically, the capacity profile of FIG. 6 is a profile illustrating a corresponding relationship between a cycle and a capacity retention rate. That is, FIG. 6 includes a reference capacity profile Rr corresponding to the reference battery, a first capacity profile Rr1 corresponding to the first battery, a second capacity profile Rr2 corresponding to the second battery, and a third capacity profile Rr3 corresponding to the third battery.

Here, the capacity profile is a diagram illustrating the capacity retention rate of the battery according to a charging and/or discharging cycle. Here, the capacity of the battery may be a fully charged capacity or a fully discharged capacity. The capacity retention rate refers to the capacity in a target cycle compared to the capacity in a beginning of life (BOL) state. For example, it is assumed that the capacity in a first cycle is Qi and the capacity in the target cycle is Qt. The capacity retention rate in the target cycle may be calculated according to Equation "Qt ÷ Qi ×100".

Referring to FIG. 6, it may be confirmed that the capacity retention rate of the reference battery is lower than that of the first to third batteries as the cycle progresses. As the cycle progresses, the capacity retention rate may be higher in the order of the reference battery, the third battery, the second battery, and the first battery. For example, as the cycle progresses, the reference battery, which is charged according to a reference charging protocol may deteriorate more than the first to third batteries, which are charged according to the first to third charging protocols.

When the battery is charged according to the charging protocol set by the apparatus 100 for setting a charging protocol according to an embodiment of the present disclosure, the occurrence of a lithium plating phenomenon in the battery due to charging may be effectively prevented.

The apparatus 100 for setting a charging protocol has an advantage of setting a charging protocol capable of increasing life expectancy of a battery by preventing unnecessary deterioration of the battery. For example, by preventing deterioration of the battery due to charging, the battery may be safely charged, and life expectancy of the battery may be increased.

Meanwhile, the control unit 120 included in the apparatus 100 for setting a charging protocol may selectively include a processor, an application-specific integrated circuit (ASIC), a chipset, a logic circuit, a register, a communication modem, and a data processing device, which are known in the art to execute various control logics performed in the present disclosure. When the control logic is implemented as software, the control unit 120 may be implemented as a set of program modules. At this time, the program modules may be stored in a memory and executed by the control unit 120. The memory may be located inside or outside the control unit 120 and may be connected to the control unit 120 by various means well-known in the art.

The apparatus 100 for setting a charging protocol may further include a storage unit 130. The storage unit 130 may store data or programs required for each component of the apparatus 100 for setting a charging protocol to perform operations and functions, or data generated in the process of performing operations and functions. The type of the storage unit 130 is not particularly limited as long as it is a known information storage means that is known to be able to record, erase, update, and read data. As an example, the information storage means may include a random access memory (RAM), a flash memory, a read-only memory (ROM), an electrically erasable programmable read-only memory (EEPROM), and a register. In addition, the storage unit 130 may store program codes in which processes executable by the control unit 120 are defined.

For example, the resistance profile and the charging protocol of the battery may be stored in the storage unit 130.

Hereinafter, an embodiment of the first reference SOC and the second reference SOC will be described.

The control unit 120 may be configured to determine a minimum point where the corresponding SOC is maximum (minimum point with a corresponding maximum SOC) in the resistance profile, and determine the SOC corresponding to the determined minimum point as the first reference SOC.

Specifically, the resistance profile of the battery may include one or more minimum points. The control unit 120 may determine a minimum point with the corresponding maximum SOC among one or more minimum points included in the resistance profile, as the first reference SOC. Here, when the resistance profile includes one minimum point, the control unit 120 may determine an SOC at the corresponding minimum point as the first reference SOC.

Referring to the definition of the minimum point, it may be confirmed that the resistance of the battery increases in an SOC section above the SOC at the minimum point. That is, the SOC section above the first reference SOC includes an SOC where a lithium electrodeposition reaction starts. Therefore, the control unit 120 may set the first reference SOC, which is strongly assumed to not cause lithium electrodeposition reaction, as a start point of the target section.

For example, in the embodiments of FIGS. 3 and 4, the minimum point with the corresponding maximum SOC in the resistance profile RP may be a point corresponding to the first SOC S1. Therefore, the control unit 120 may set the first SOC S1 as the first reference SOC.

The control unit 120 may be configured to determine a target point where a corresponding change rate is maximum in the resistance profile, and determine an SOC corresponding to the determined target point as the second reference SOC.

Preferably, the control unit 120 may determine the second reference SOC in the SOC section above the first reference SOC. That is, the control unit 120 may determine a target point with the maximum change rate in the SOC section above the first reference SOC.

The resistance change rate for the SOC may gradually decrease in an SOC section after the target point. That is, since the negative electrode voltage decreases in the SOC section after the target point, the resistance change rate of the resistance profile of the battery may appear to decrease. Therefore, the control unit 120 may determine the target point, which is strongly estimated as a start point where the negative electrode voltage starts to decrease, and set the SOC corresponding to the target point as the second reference SOC.

For example, in the embodiments of FIGS. 3 and 4, the resistance change rate (differential resistance) at a point corresponding to the fourth SOC S4 may be maximum in the resistance profile RP. Therefore, the control unit 120 may set the second reference SOC to the fourth SOC S4.

The target section which has been set based on the minimum point of the resistance profile and the change rate may be an SOC section before the negative electrode voltage decreases below a predetermined voltage. Therefore, according to a charging protocol which has been set based on the target SOC (charge upper limit SOC) within the target section, it is possible to prevent the unnecessary deterioration of the battery due to charging. Therefore, the apparatus 100 for setting a charging protocol has an advantage of setting a charging protocol without the occurrence of lithium plating.

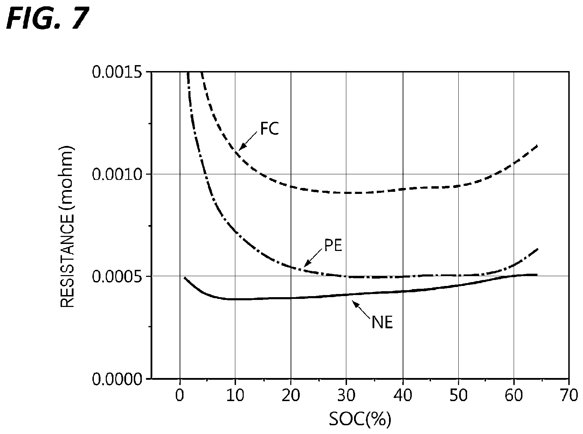

FIG. 7 is a diagram schematically illustrating resistance profiles of a battery FC, a positive electrode PE, and a negative electrode NE according to an embodiment of the present disclosure. FIG. 7 includes resistance profiles for the battery FC, the positive electrode PE, and the negative electrode NE. The resistance of the negative electrode NE decreases near the end of the charge (about 60% of SOC), but the resistance of the positive electrode PE may increase. In the case of a battery with a large ratio of the resistance of the positive electrode, since an increase in the resistance of the positive electrode PE is more dominant than a decrease in the resistance of the negative electrode NE, the resistance of the battery (FC) may also increase.

For example, a battery including an excessive-lithium manganese oxide containing an excessive amount of lithium as a positive electrode active material is a representative battery in which the increase in the resistance of the positive electrode PE is more dominant than the decrease in the resistance of the negative electrode NE. Here, the excessive-lithium manganese oxide containing an excessive amount of lithium has a crystal structure in which a layered phase (LiMO₂) and a rock salt phase (Li₂MnO₃) are mixed. While the rock salt phase is activated during a charging and/or discharging process, an additional capacity is exhibited by an oxygen redox reaction, so that a high capacity may be implemented. For example, since the oxygen redox reaction causes a manganese (Mn) redox reaction, the additional capacity of the battery may be exhibited.

As described above, when the negative electrode voltage drops below a predetermined voltage, lithium metal may be precipitated on the surface of the negative electrode by the lithium electrodeposition reaction. However, in the case of a battery in which an increase in the resistance of the positive electrode is dominant, the decrease in the resistance of the negative electrode may not clearly appear in the resistance profile of the battery. In this case, since the battery may be charged until the negative electrode voltage drops below the predetermined voltage, a lithium plating phenomenon may occur in the battery.

Therefore, the apparatus 100 for setting a charging protocol may determine an appropriate charge upper limit SOC for each C-rate by considering a decrease in the resistance of the negative electrode, without being limited to the type of battery. Therefore, the charging protocol set by the apparatus 100 for setting a charging protocol has an advantage of preventing the occurrence of a lithium plating phenomenon in the battery during the charging process.

The profile acquisition unit 110 may be configured to acquire a plurality of resistance profiles with different corresponding C-rates.

For example, the profile acquisition unit 110 may acquire a plurality of resistance profiles generated by charging of one reference battery at each of the plurality of C-rates. As another example, the profile acquisition unit 110 may acquire a plurality of resistance profiles generated by charging each of a plurality of batteries of the same type at the corresponding C-rate.

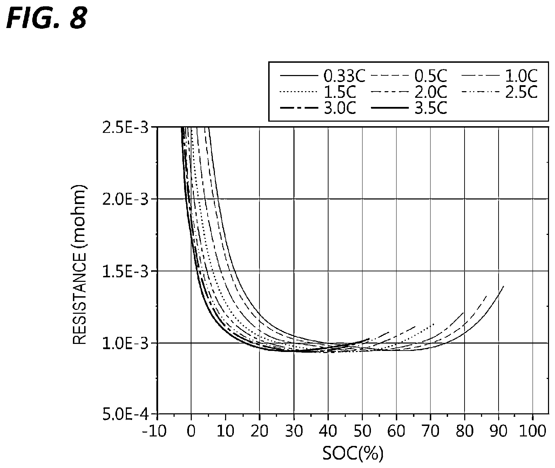

FIG. 8 is a diagram schematically illustrating a plurality of resistance profiles, according to an embodiment of the present disclosure.

Specifically, FIG.8 includes a first resistance profile corresponding to 0.33C, a second resistance profile corresponding to 0.5C, a third resistance profile corresponding to 1.0C, a fourth resistance profile corresponding to 1.5C, a fifth resistance profile corresponding to 2.0C, a sixth resistance profile corresponding to 2.5C, a seventh resistance profile corresponding to 3.0C, and an eighth resistance profile corresponding to 3.5C.

The control unit 120 may be configured to determine a target SOC in each of the plurality of resistance profiles.

Specifically, the C-rates corresponding to each of the plurality of resistance profiles may be different from each other. Therefore, the control unit 120 may determine a target SOC corresponding to each C-rate by determining a target SOC in each of the plurality of resistance profiles.

The control unit 120 may be configured to set a charging protocol to include a corresponding relationship between the C-rates and the target SOC for the plurality of resistance profiles.

For example, in the embodiment of FIG. 8, the charging protocol set by the control unit 120 may include a first charge upper limit SOC corresponding to 0.33C, a second charge upper limit SOC corresponding to 0.5C, a third charge upper limit SOC corresponding to 1.0C, a fourth charge upper limit SOC corresponding to 1.5C, a fifth charge upper limit SOC corresponding to 2.0C, a sixth charge upper limit SOC corresponding to 2.5C, a seventh charge upper limit SOC corresponding to 3.0C, and an eighth charge upper limit SOC corresponding to 3.5C.

That is, the apparatus 100 for setting a charging protocol has an advantage of providing an optimal charging protocol capable of preventing a lithium plating phenomenon from occurring in a battery due to charging, by setting the charging protocol including a corresponding relationship between the C-rate and the charge upper limit SOC.

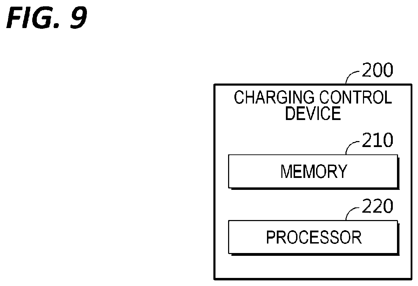

FIG. 9 is a diagram schematically illustrating a charging control device 200, according to another embodiment of the present disclosure.

Referring to FIG. 9, the charging control device 200 may include a memory 210 and a processor 220.

Specifically, a charging protocol set by the apparatus 100 for setting a charging protocol may be stored in the memory 210. When the processor 220 needs to control charging of a charging target battery, the processor 220 may access the memory 210 to obtain the stored charging protocol. The processor 220 may be configured to control charging of the charging target battery based on the charging protocol.

Meanwhile, the processor 220 included in the charging control device 200 may selectively include a processor, an application-specific integrated circuit (ASIC), a chipset, a logic circuit, a register, a communication modem, and a data processing device, which are known in the art to execute various control logics performed in the present disclosure. When the control logic is implemented as software, the processor 220 may be implemented as a set of program modules. At this time, the program modules may be stored in a memory and executed by the processor 220. The memory may be located inside or outside the processor 220 and may be connected to the processor 220 by various means well-known in the art.

The memory 210 included in the charging control device 200 may store data or programs required for each component of the charging control device 200 to perform operations and functions, or data generated in a process of performing operations and functions. The type of the memory 210 is not particularly limited as long as it is a known information storage means that is known to be able to record, erase, update, and read data. As an example, the information storage means may include a random access memory (RAM), a flash memory, a read-only memory (ROM), an electrically erasable programmable read-only memory (EEPROM), and a register. In addition, the memory 210 may store program codes in which processes executable by the processor 220 are defined.

In addition, the charging control device 200, according to the present disclosure, may be included in a battery pack 1. For example, the battery pack 1 according to the present disclosure may include the charging control device 200 described above and one or more battery cells. In addition, the battery pack 1 may further include electrical components (such as a relay and a fuse) and a case.

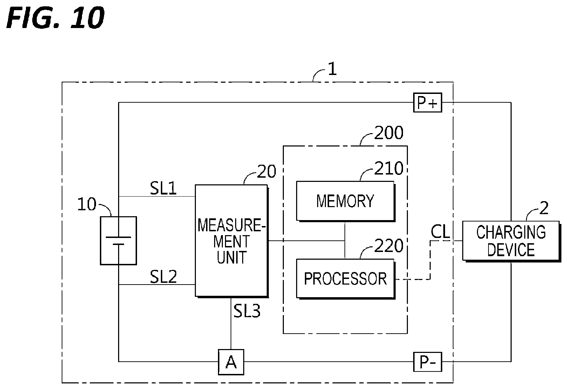

FIG. 10 is a diagram schematically illustrating the battery pack 1 according to another embodiment of the present disclosure.

The positive terminal of the battery 10 may be connected to the positive terminal P+ of the battery pack 1, and the negative terminal of the battery 10 may be connected to the negative terminal P- of the battery pack 1.

A measurement unit 20 may be connected to a first sensing line SL1, a second sensing line SL2, and a third sensing line SL3. For example, the measurement unit 20 may be connected to the positive terminal of the battery 10 through the first sensing line SL1, and may be connected to the negative terminal of the battery 10 through the second sensing line SL2. The measurement unit 20 may measure the voltage of the battery 10 based on the voltage measured from each of the first sensing line SL1 and the second sensing line SL2.

The measurement unit 20 may be connected to a current measurement unit A through the third sensing line SL3. For example, the current measurement unit A may be an ammeter or a shunt resistor that may measure a charging current and a discharging current of the battery 10. The measurement unit 20 may measure the charging current and the discharging current of the battery 10 through the third sensing line SL3.

The battery information measured by the measurement unit 20 may be transmitted to the charging control device 200. For example, the measurement unit 20 and the charging control device 200 may be communicatively connected in a wired and/or wireless manner. The battery information received from the measurement unit 20 may be stored in the memory 210 and may be input to the processor 220. The processor 220 may access the memory 210 to obtain the stored battery information.

A charging device 2 may be connected to the positive terminal P+ and the negative terminal P- of the battery pack 1. Here, the charging device 2 is a device for charging the battery 10.

The processor 220 may be communicatively connected to the charging device 2 via a communication line CL in a wired and/or wireless manner. For example, the processor 220 may perform a power-line communication (PLC) with the charging device 2. The processor 220 may determine whether the SOC of the battery 10 has reached the charge upper limit SOC corresponding to the current C-rate, based on the charging protocol stored in the memory 210. When the SOC of the battery 10 has reached the charge upper limit SOC, the processor 220 may command the charging device 2 to decrease the C-rate. For example, the processor 220 may select a C-rate less than the current C-rate in the charging protocol and command the charging device 2 to charge at the selected C-rate.

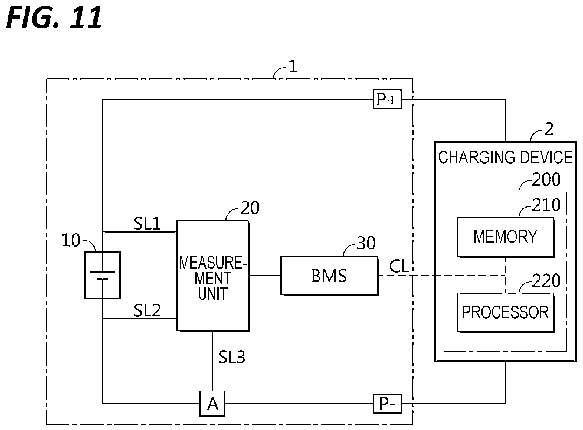

FIG. 11 is a diagram schematically illustrating the charging device 2 according to still another embodiment of the present disclosure.

The battery pack 1 may include the battery 10, the measurement unit 20, and a battery management system (BMS) 30. Here, the BMS 30 is a battery management system that diagnoses the state of the battery, and controls charging and discharging of the battery. For example, the BMS 30 may have a configuration widely used in the conventional art.

The charging device 2 may include the charging control device 200. For example, the charging device 2 may output a charging current at a C-rate set by the charging control device 200.

The BMS 30 may be communicatively connected to the charging device 2 via the communication line CL in a wired and/or wireless manner. For example, the charging device 2 may receive battery information from the BMS 30. The battery information may be stored in the memory 210 and input to the processor 220. In addition, the processor 220 may access the memory 210 to obtain the stored battery information.

The processor 220 may determine whether the SOC of the battery 10 has reached the charge upper limit SOC corresponding to the current C-rate, based on the charging protocol stored in the memory 210. When the SOC of the battery 10 has reached the charge upper limit SOC, the processor 220 may decrease the charging C-rate. For example, the processor 220 may decrease the charging current output from the charging device 2. For example, the processor 220 may select a C-rate less than the current C-rate in the charging protocol, and change the C-rate of the charging current output from the charging device 2 to the selected C-rate. Accordingly, the charging current corresponding to the decreased C-rate in the charging device 2 may be output to the battery 10.

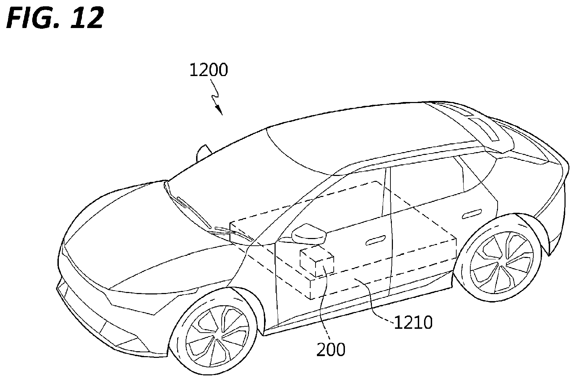

FIG. 12 is a diagram schematically illustrating a vehicle according to still another embodiment of the present disclosure.

Referring to FIG. 12, a battery pack 1210, according to an embodiment of the present disclosure, may be included in a vehicle 1200, such as an electric vehicle (EV) or a hybrid vehicle (HV). The battery pack 1210 may drive the vehicle 1200 by supplying power to the motor of the vehicle 1200 through an inverter included in the vehicle 1200. Here, the battery pack 1210 may include a charging control device. For example, the vehicle 1200 may include the charging control device 200.

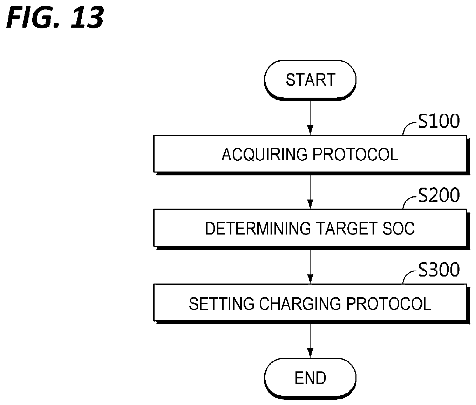

FIG. 13 is a diagram schematically illustrating a method for setting a charging protocol, according to still another embodiment of the present disclosure.

Referring to FIG. 13, the method for setting a charging protocol may include acquiring a profile in step S100, determining a target SOC in step S200, and setting a charging protocol in step S300.

Preferably, each step of the method for setting a charging protocol may be performed by the apparatus 100 for setting a charging protocol. Hereinafter, for the convenience of explanation, the contents overlapping with the aforementioned contents will be omitted or briefly described.

The step S100 of acquiring the profile is a step of acquiring a resistance profile that indicates a corresponding relationship between a state of charge (SOC) and resistance for a battery, which is charged at a predetermined C-rate, and may be performed by the profile acquisition unit 110.

For example, the profile acquisition unit 110 may receive the resistance profile of the battery from the outside. That is, the profile acquisition unit 110 may receive and acquire the resistance profile of the battery from the outside.

As another example, the profile acquisition unit 110 may receive information regarding the SOC and the resistance of the battery from the outside. Also, the profile acquisition unit 110 may map the SOC and resistance corresponding to each other, thereby generating and acquiring the resistance profile.

As another example, the profile acquisition unit 110 may directly measure the current and the voltage of the battery. The profile acquisition unit 110 may calculate the SOCs and the resistance for each SOC based on the measured current and voltage. Also, the profile acquisition unit 110 may generate the resistance profile, based on the calculated SOCs and the resistance for each SOC. That is, the profile acquisition unit 110 may directly generate and acquire the resistance profile.

The step S200 of determining a target SOC is a step of determining the target SOC satisfying a predetermined condition in the resistance profile, and may be performed by the control unit 120.

Specifically, the control unit 120 may be configured to determine a first reference SOC and a second reference SOC satisfying a predetermined condition in the resistance profile, and determine an SOC section including the first reference SOC and the second reference SOC as a target section.

For example, the control unit 120 may be configured to determine a minimum point with the corresponding maximum SOC in the resistance profile, and determine the SOC corresponding to the determined minimum point as the first reference SOC.

For example, the control unit 120 may be configured to determine a target point with a corresponding maximum change rate in the resistance profile, and determine the SOC corresponding to the determined target point as the second reference SOC.

The step S300 of setting a charging protocol sets a charging protocol including a corresponding relationship between a predetermined C-rate and the target SOC, and may be performed by the control unit 120.

The control unit 120 may be configured to set the target SOC to a charge upper limit SOC corresponding to the predetermined C-rate.

That is, the charging protocol may include mapping information between the C-rate and the charge upper limit SOC. For example, when the battery is charged at a first C-rate according to the charging protocol, the charging of the battery may be terminated when the SOC of the battery reaches the charge upper limit SOC corresponding to the first C-rate.

The embodiments of the present disclosure described above are implemented not only through the devices and methods, but also through a program that implements the functions corresponding to the configurations of the embodiments of the present disclosure, or a recording medium in which the program is recorded. The implementation may be readily implemented by an expert in the technical field to which the present disclosure belongs, from the description of the embodiments of the present disclosure described above.

Although the present disclosure has been described above through limited embodiments and drawings, the present disclosure is not limited thereto, and it is obvious that various modifications and variations are possible within the scope of the technical idea of the present disclosure and the equivalent scope of the patent claims to be described below by an ordinary skill in the art to which the present disclosure belongs.

In addition, the present disclosure described above allows for various substitutions, modifications, and changes thereof within the scope of the technical idea of the present disclosure by an ordinary skill in the art to which the present disclosure belongs. Thus, the present disclosure is not limited by the aforementioned embodiments and attached drawings, but the entirety or part of each of the embodiments may be selectively combined and configured so that various modifications thereof may be made.

### (Reference symbols)

1: battery pack
2: charging device
10: battery
20: measurement unit
30: BMS
100: apparatus for setting a charging protocol
110: profile obtaining unit
120: control unit
130: storage unit
200: charging control device
210: memory
220: processor
1200: vehicle
1210: battery pack

## Claims

1. An apparatus for setting a charging protocol, the apparatus comprising:
a profile acquisition circuitry configured to acquire a resistance profile indicating a corresponding relationship between a state of charge (SOC) and resistance for a battery charged at a predetermined C-rate; and
a controller configured to determine a target SOC satisfying a predetermined condition in the resistance profile, and set a charging protocol including a corresponding relationship between the predetermined C-rate and the target SOC.

2. The apparatus according to claim 1, wherein the controller is configured to determine a target section in the resistance profile, and determine the target SOC among SOCs within the target section.

3. The apparatus according to claim 2, wherein the controller is configured to determine a first reference SOC and a second reference SOC satisfying the predetermined condition in the resistance profile, and determine an SOC section including the first reference SOC and the second reference SOC as the target section.

4. The apparatus according to claim 3, wherein the controller is configured to determine the second reference SOC in the SOC section exceeding the first reference SOC.

5. The apparatus according to claim 3, wherein the controller is configured to determine a minimum point with a corresponding maximum SOC in the resistance profile, and determine the SOC corresponding to the determined minimum point as the first reference SOC.

6. The apparatus according to claim 3, wherein the controller is configured to determine a target point with a corresponding maximum change rate in the resistance profile, and determine the SOC corresponding to the determined target point as the second reference SOC.

7. The apparatus according to claim 1, wherein the controller is configured to set the target SOC to a charge upper limit SOC corresponding to the predetermined C-rate.

8. The apparatus according to claim 1, wherein the profile acquisition circuitry is configured to acquire a plurality of resistance profiles with different corresponding C-rates, and
the controller is configured to determine the target SOC in each of the plurality of resistance profiles, and set the charging protocol to include the corresponding relationship between the C-rate and the target SOC for the plurality of resistance profiles.

9. The apparatus according to claim 1, wherein the resistance profile is set to indicate a corresponding relationship between an SOC in a resting state and resistance according to a voltage drop in the resting state during charging of the battery at the predetermined C-rate while repeating a charging state and the resting state of the battery.

10. A charging control device for controlling charging of a charging target battery, based on the charging protocol set by the apparatus according to any one of claims 1 to 9.

11. A battery pack including the charging control device according to claim 10.

12. A vehicle including the charging control device according to claim 10.

13. A method for setting a charging protocol, the method comprising:
acquiring a resistance profile indicating a corresponding relationship between a state of charge (SOC) and resistance for a battery charged at a predetermined C-rate;
determining a target SOC satisfying a predetermined condition in the resistance profile; and
setting a charging protocol including a corresponding relationship between the predetermined C-rate and the target SOC.
